# EUROPEAN PATENT SPECIFICATION

(11) **EP 2 668 456 B1**
(45) Date of publication and mention of the grant of the patent: **27.03.2019**
(21) Application number: 11801922.3
(22) Date of filing: 06.12.2011
(51) Int. Cl.: F25B 49/02

(54) **CONTROL SYSTEM**
REGELSYSTEM
DISPOSITIF DE RÉGULATION

(30) Priority: 26.01.2011 US 201161436383 P
(43) Date of publication of application: 04.12.2013
(73) Proprietor: Carrier Corporation, Farmington, CT 06489 (US)
(72) Inventor: LI, Wenhua, Manlius, NY 13104 (US)
(74) Representative: Dehns
(86) International application number: PCT/US2011/063452
(87) International publication number: WO 2012/102786

(56) References cited:
- EP-A1- 1 184 631
- WO-A1-2007/018522
- WO-A1-2007/046794
- US-A1- 2003 000 236

## Description

### FIELD OF THE DISCLOSURE

The present disclosure generally relates to refrigeration units, and more particularly, to systems and methods for controlling a refrigeration unit using a flexible inverter configuration.

### BACKGROUND OF THE DISCLOSURE

Refrigeration systems are generally used to maintain a relatively low temperature within a designated area. Refrigeration systems serve to remove heat from a substantially enclosed area and transfer the heat to an environment external to the enclosed area. Refrigeration systems are commonly used in association with residential and commercial food refrigerators, air-conditioning units in homes and automobiles, as well as with refrigerated cargos of ships and trucks. Mobile refrigeration systems used to condition frozen and perishable loads in cargo spaces of trucks and trailers are referred to as transport refrigeration units.

The basic components of a refrigeration unit for residential, commercial or mobile applications typically include a compressor, condenser coil, condenser fan, expansion valve, evaporator coil and evaporator fan. Residential refrigerators typically employ single-speed compressors that are either in an on or an off state and can only operate at one speed. Such refrigeration systems are unable to effectively adapt to the varying conditions that occur throughout the day, and further, are unable to efficiently use electric power once the unit is at a steady state.

Efforts have been made to improve energy consumption and performance in a refrigeration unit by employing an inverter compressor. In a typical inverter compressor configuration, an inverter is used to supply pulsed power to a compressor in a controlled manner. The inverter compressor is capable of operating at a number of desired speeds, depending on the desired application and the degree of cooling required of the refrigeration unit. While such variable control of the compressor enables quicker cooling capabilities and less power consumption at steady state by operating the compressor at lower speeds, there is still much room for improvement.

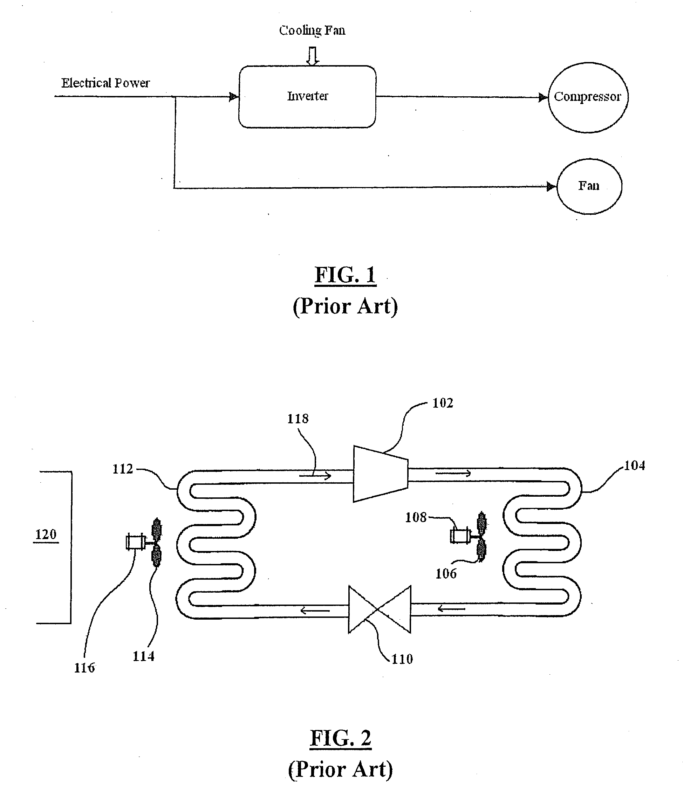

Refrigeration units are typically configured to cool at a specific rate at full load. This often results in the combination of an inverter with a relatively high load capacity and a compressor with a relatively low load capacity, as depicted in FIG. 1. The compressor is driven to a higher speed for full load operation (pull down or start/stop) and at a lower speed by the inverter for other load demands. Accordingly, the actual load on the refrigeration unit is not at full load capacity at all times. In fact, the load experienced by the refrigeration unit during most of its operations is actually much less. Such a combination of a high load capacity inverter with a low load capacity compressor results in efficiency loss and decreased capacity modulation. Furthermore, the cooling demand from the internal fan associated with the inverter increases during full load operation, resulting in greater power consumption. In addition, if the inverter also provides power to the evaporating fan, the air flow provided by the evaporator fan will often be insufficient for use with steady state operations.

The disclosed systems and methods are directed at overcoming one or more of the deficiencies set forth above.

WO2007/018522 discloses a control system for a refrigeration unit comprising a power source, a compressor, an inverter, an evaporator fan, switches and a controller.

### SUMMARY OF THE DISCLOSURE

The present invention provides a control system for a refrigeration unit being powered by a power source and having a compressor, an inverter and an evaporator fan, characterised in that the control system comprises: a first switch electrically coupled to the compressor and configured to, in a first state, selectively couple the compressor with the power source, and in a second state, selectively couple the compressor with the inverter; a second switch electrically coupled to the evaporator fan and configured to, in a second state, selectively couple the evaporator fan with the power source, and in a first state, selectively couple the evaporator fan with the inverter; and a controller operatively coupled to each of the first and second switches and configured to independently engage one or more of the first and second switches into a respective one of the first state and the second state based on a triggering event; wherein engaging the first and second switches in the respective first states corresponds to full load operation of the refrigeration unit and engaging the first and second switches in the respective second states corresponds to part load operation of the refrigeration unit.

The control system may further comprise: the compressor; the evaporator fan; the inverter, the inverter being in communication with the power source, and the controller may be configured to engage independently the first and second switches into a respective one of the first state and the second state based on the triggering event.

Also disclosed is a method for controlling a refrigeration unit being powered by a main power source and having a compressor, an inverter and an evaporator fan is provided. The method may determine a load demand of the refrigeration unit, generate a triggering event in response to a substantial change in the load demand, and simultaneously interchange the power supplied to each of the compressor and the evaporator fan in response to the triggering event.

Other advantages and features will be apparent from the following detailed description when read in conjunction with the attached drawings.

### BRIEF DESCRIPTION OF THE DRAWINGS

FIG. 1 is a diagrammatic view of a prior art embodiment of a refrigeration unit;
FIG. 2 is a schematic view of the prior art embodiment of FIG. 1;
FIG. 3 is a diagrammatic view of one exemplary refrigeration control system; and
FIG. 4 is a graphical view of a temperature profile associated with the exemplary refrigeration control system of FIG. 3.

It should be understood that the drawings are not necessarily to scale and that the disclosed embodiments are sometimes illustrated diagrammatically and in partial views. In certain instances, details which are not necessary for an understanding of the disclosed methods and systems or which render other details difficult to perceive may have been omitted. It should be understood, of course, that this disclosure is not limited to the particular embodiments illustrated herein.

### DETAILED DESCRIPTION OF THE DISCLOSURE

Referring to FIG. 2, a schematic diagram of a conventional refrigeration unit 100 is provided. The refrigeration unit 100 may include a compressor 102, a condenser coil 104, a condenser fan 106 with a condenser motor 108, an expansion valve 110, an evaporator coil 112, an evaporator fan 114 with an evaporator motor 116, and refrigerant 118. The refrigerant may include, for example, fluorinated carbons, chlorinated carbons, brominated carbons, carbon dioxide, ammonia, ethane-based refrigerants, methane-based refrigerants, water, or any other refrigerant commonly used in the art for the purposes of absorbing and transferring heat. Refrigerants may absorb heat by evaporating and changing its state from a liquid to a gas, for example, at low temperatures and pressures, and release heat by condensing and changing its state from a gas back to a liquid, for example, at higher temperatures and pressures.

As shown in FIG. 2, the refrigerant 118 may enter the compressor 102 in a high-temperature, low-pressure gas state. The compressor 102 may compress the refrigerant 118 into a high-temperature, high-pressure gas state. In this state, the refrigerant 118 may flow through the condenser coil 104 and liquefy while releasing heat. The heat emitted by the refrigerant 118 may be absorbed by the condenser coil 104. The condenser fan 106 may then circulate cool air across the condenser coil 104 so as to transfer the heat from the condenser coil 104 to an exterior environment. The expansion valve 110 may then reduce the pressure of the refrigerant 118 as the refrigerant 118 flows through the expansion valve 110, creating a low-temperature, low-pressure liquid. The low-temperature, low-pressure liquid refrigerant 118 may flow through the evaporator coil 112 while the evaporator fan 114 draws heat from a desired area to be cooled, for example, a refrigeration cabinet 120, and circulates the heat across the evaporator coil 112. The heat may then be absorbed and drawn away by the refrigerant 118 as it flows through the evaporator coil 112. As the refrigerant 118 absorbs the heat, the refrigerant 118 may change from liquid back to gas.

In order for the refrigerant 118 to absorb and transfer the maximum amount of heat, the basic components in the refrigerant unit 100, for example, the compressor 102 and evaporator fan 114 of FIG. 2, may need to operate efficiently. The compressor 102 may generally serve as a pump to control the circulation of the refrigerant 118, and it may add pressure to the refrigerant 118 so as to increase its temperature. The evaporator fan 114 may serve to circulate the air flow, particularly in the cabinet 120. Among other things, inefficient operation of the compressor 102 and/or the evaporator fan 114 may result in uneven distribution of temperature within the cabinet 120 as well as inaccurate temperature readings. Accordingly, it is a shared interest to provide means for controlling the compressor 102 and the evaporator fan 114 of the refrigeration unit 100 as efficiently as possible.

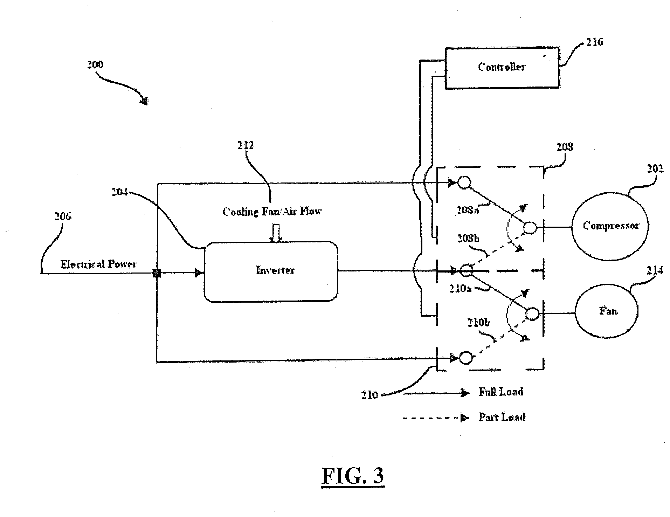

Turning now to FIG. 3, one exemplary embodiment of a refrigeration control system 200 with a flexible inverter configuration is provided. In the particular embodiment shown, the compressor 202 and the evaporator fan 214 may be arranged so as to receive power from an inverter 204 and a main power source 206. The compressor 202 may include, for example, a rotary screw compressor, a reciprocating compressor, a scroll compressor, a centrifugal compressor, or the like. The main power source 206 may include a direct current (DC) power source, an alternating current (AC) power source, or any other power source suitable for use with the refrigeration control system 200. Furthermore, the inverter 204 may be configured to receive power supplied by the main power source 206, and output a pulsed power signal of a predetermined frequency to one of the compressor 202 and the evaporator fan 214.

Still referring to FIG. 3, the control system 200 may include one or more switches 208, 210 that are configured to selectively supply power from one of the inverter 204 and the main power source 206 to the compressor 202 and the evaporator fan 214. In one embodiment, the control system 200 may include a first switch 208 that is associated with the compressor 202 and a second switch 210 that is associated with the evaporator fan 214. Moreover, the first switch 208 may be configured to selectively couple the compressor 202 with one of the inverter 204 and the main power source 206, while the second switch 210 may similarly be configured to selectively couple the evaporator fan 214 with one of the inverter 204 and the main power source 206. Each of the first and second switches 208, 210 may be switchable between a first state 208a, 210a and a second state 208b, 210b. For example, in the first state 208a, 210a, the first switch 208 may cause the compressor 202 to be in electrical communication with the main power source 206, while the second switch 210 may cause the evaporator fan 214 to be in electrical communication with the inverter 204. Correspondingly, in the second state 208b, 210b, the first switch 208 may cause the compressor 202 to be in electrical communication with the inverter 204, while the second switch 210 may cause the evaporator fan 214 to be in electrical communication with the main power source 206. The switches 208, 210 of FIG. 3 may include latches, relays, analog switches, digital switches, or any other controllable switch commonly used in the art. Furthermore, each of the switches 208, 210 may be configured to engage simultaneously or after a predetermined delay with respect to one another. In alternative embodiments, the control system 200 may employ a single switch or an array of switches configured to interface each of the compressor 202 and the evaporator fan 214 with the appropriate power source.

As shown in FIG. 3, a controller 216 may be provided to control each of the first and second switches 208, 210 and engage the switches 208, 210 in response to significant changes in the operating conditions of the refrigeration control system 200. In one exemplary embodiment, the controller 216 may be configured to generate a triggering event in response to the detection of any uneven distribution of temperature within the associated cabinet 120. To compensate for uneven temperature distribution, for example, the controller 216 may be configured to engage each of the first and second switches 208, 210 into the second state 208b, 210b so as to couple the compressor 202 with the inverter 204 and to couple the evaporator fan 214 to the main power source 206. More specifically, by providing direct power from the main power source 206 to the evaporator fan 214, the evaporator fan 214 may be able to operate at full potential so as to more effectively circulate and evenly distribute the air within the cabinet 120. Furthermore, by providing pulsed power from the inverter 204 to the compressor 202, operation of the compressor 202 may be maintained more efficiently. The controller 216 may hold the switches 208, 210 in the second state 208b, 210b until temperatures within the cabinet 120 exhibit even distribution, at which point the controller 216 may restore each of the first and second switches 208, 210 to the first state 208a, 210a.

In alternative embodiments, the controller 216 of FIG. 3 may be configured to generate a triggering event in response to the amount of cooling that is required, or the load demand. For example, during full load operation or when maximum cooling is required, the controller 216 may engage the first and second switches 208, 210 into the first state 208a, 210a. Accordingly, in response to relatively high load demands, the compressor 202 may be powered by the main power source 206 to be operated at a higher capacity, while the less essential evaporator fan 214 may be supplied with pulsed power from the inverter 204. The controller 216 may hold the switches 208, 210 in the first state 208a, 210a until air within the cabinet 120 reaches a desired temperature, or until a steady state has been reached. At steady state, the load demand may be lowered as temperatures within the cabinet 120 only need to be preserved and not lowered. Thus, in response to a relatively low load demand, or at part load, the controller 216 may be configured to engage each of the first and second switches 208, 210 into the second state 208b, 210b. Moreover, at part load, the evaporator fan 214 may be powered by the main power source 206 so as to operate at higher capacity and provide proper circulation of air within the cabinet 120. As less cooling is required, the compressor 202 may in turn be supplied with pulsed power from the inverter 204. In further modifications, the refrigeration control system 200 may be configured to simultaneously operate both of the compressor 202 and the evaporator fan 214 at either high capacity or low capacity depending on the immediate load demand. Specifically, the controller 216 and the switches 208, 210 may be configured to couple both of the compressor 202 and the evaporator fan 214 to either the main power source 206 or the inverter 204. In still further alternatives, the controller 216 and the switches 208, 210 may be configured to disconnect power to both of the compressor 202 and the evaporator fan 214 during certain steady state conditions.

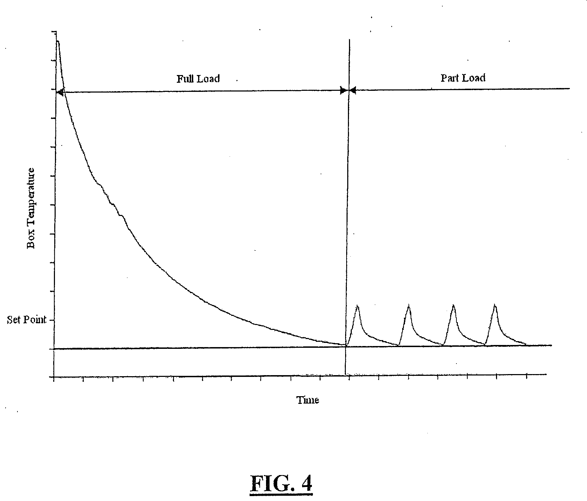

With reference to the graph of FIG. 4, a temperature profile of a cabinet 120 being cooled by the exemplary refrigeration control system 200 is provided. As shown, during full load operations, the initial temperature within the cabinet 120 may be exponentially decreased until the temperature reaches a desired set point or steady state. Such characteristics may be responsive to operating the compressor 202 at a relatively high capacity with the main power source 206 as well as simultaneously operating the evaporator fan 214 at a relatively low capacity with the inverter 204, as in the control system 200 of FIG. 3 for example. During part load operations, or once the desired set point has been reached, the temperature within the cabinet 120 may effectively be maintained within an acceptable range of the set point using minimal power. Such characteristics may be responsive to operating the compressor 202 at a relatively low capacity with the inverter 204 while simultaneously operating the evaporator fan 214 at a relatively high capacity with the main power source 206 to maintain proper circulation.

Accordingly, the controller 216 of FIG. 3, for instance, may be configured to initially determine and to continuously monitor a load demand of the refrigeration control system 200. If the controller 216 determines a substantial change in the load demand, the controller 216 may then proceed to generate a triggering event in response to the change. Furthermore, in response to the triggering event, the controller 216 may be configured to simultaneously interchange the power supplied to each of the compressor 202 and the evaporator fan 214 based on the type of triggering event generated. If the triggering event indicates a substantial increase in load demand, the controller 216 of FIG. 3, for example, may engage the switches 208, 210 into the first state 208a, 210a until an additional triggering event is generated. Correspondingly, if the triggering event indicates a substantial decrease in load demand, or once the desired set point has been reached, the controller 216 of FIG. 3 may engage the switches 208, 210 into the second state 208b, 210b until the refrigeration control system 200 is powered off or until the load demand increases again.

Such implementations of a flexible inverter configuration as disclosed herein may desirably enable the use of a compressor with a relatively higher load capacity and an inverter with a relatively lower load capacity, as compared with the embodiments of the prior art. In particular, the use of a higher capacity compressor during full load operations may result in minimized power consumption and optimized performance when it is being powered directly by the main power source 206. Moreover, the use of a higher capacity compressor during part load operations may result in lower and more controlled speeds when it is being powered by the inverter 204. Furthermore, as the inverter is not required to operate the compressor during all modes of operation, for example, during full load operations, a lower capacity inverter as well as a lower capacity inverter fan may be employed. More specifically, the load capacity of the compressor may be at least 1.5 times greater than the load capacity of the inverter.

While only certain embodiments have been set forth, alternatives and modifications will be apparent from the above description to those skilled in the art. These and other alternatives are considered equivalents and within the spirit and scope of this disclosure and the appended claims.

## Claims

1. A control system (200) for a refrigeration unit being powered by a power source (206) and having a compressor (202), an inverter (204) and an evaporator fan (214), **characterised in that** the control system comprises:
a first switch (208) electrically coupled to the compressor and configured to, in a first state (208a), selectively couple the compressor with the power source, and in a second state (208b), selectively couple the compressor with the inverter;
a second switch (210) electrically coupled to the evaporator fan and configured to, in a second state (210b), selectively couple the evaporator fan with the power source, and in a first state (210a), selectively couple the evaporator fan with the inverter; and
a controller (216) operatively coupled to each of the first and second switches and configured to independently engage one or more of the first and second switches into a respective one of the first state and the second state based on a triggering event;
wherein engaging the first and second switches in the respective first states corresponds to full load operation of the refrigeration unit and engaging the first and second switches in the respective second states corresponds to part load operation of the refrigeration unit.

2. The control system of claim 1, wherein the triggering event corresponds to a change in load demand of the refrigeration unit, the controller being configured to engage the first and second switches into the respective first states during full load operation and into the respective second states during part load operation.

3. The control system of claim 2, wherein the change in load demand of the refrigeration unit corresponds to a change in temperature distribution within a cabinet of the refrigeration unit.

4. The control system of claim 1, wherein the controller is configured to engage the first and second switches into the first state in response to even temperature distribution within the cabinet.

5. The control system of claim 1, wherein the compressor has a substantially greater load capacity than that of the inverter.

6. The control system of claim 5, wherein the load capacity of the compressor is greater than that of the inverter by at least 1.5 times.

7. The control system of any preceding claim comprising:
the compressor;
the evaporator fan;
the inverter, the inverter being in communication with the power source, and wherein:
the controller is configured to engage independently the first and second switches into a respective one of the first state and the second state based on the triggering event.

## Patentansprüche

1. Regelsystem (200) für ein Kühlaggregat, das von einer Energiequelle (206) angetrieben wird und einen Verdichter (202), einen Inverter (204) und ein Verdampfergebläse (214) aufweist,**dadurch gekennzeichnet, dass** das Regelsystem Folgendes umfasst:
einen ersten Schalter (208), der elektrisch mit dem Verdichter verbunden ist und konfiguriert ist, um in einem ersten Zustand (208a) selektiv den Verdichter mit der Energiequelle zu verbinden und in einem zweiten Zustand (208b) selektiv den Verdichter mit dem Inverter zu verbinden;
einen zweiten Schalter (210), der elektrisch mit dem Verdampfergebläse verbunden ist und konfiguriert ist, um in einem zweiten Zustand (210b) selektiv das Verdampfergebläse mit der Energiequelle zu verbinden und in einem ersten Zustand (210a) selektiv das Verdampfergebläse mit dem Inverter zu verbinden; und
einen Regler (216), der in Wirkverbindung mit jedem aus dem ersten und dem zweiten Schalter steht und konfiguriert ist, um unabhängig einen oder mehrere aus dem ersten und dem zweiten Schalter in einen jeweiligen aus dem ersten Zustand und dem zweiten Zustand basierend auf einem auslösenden Ereignis in Eingriff zu bringen;
wobei das Ineingriffbringen des ersten und des zweiten Schalters in die jeweiligen ersten Zustände dem Volllastbetrieb des Kühlaggregats entspricht und das Ineingriffbringen des ersten und des zweiten Schalters in die jeweiligen zweiten Zustände dem Teillastbetrieb des Kühlaggregats entspricht.

2. Regelsystem nach Anspruch 1, wobei das auslösende Ereignis einer Veränderung der Lastanforderung des Kühlaggregats entspricht, wobei der Regler konfiguriert ist, um den ersten und den zweiten Schalter in die jeweiligen ersten Zustände während des Volllastbetriebs und in die jeweiligen zweiten Zustände während des Teillastbetriebs in Eingriff zu bringen.

3. Regelsystem nach Anspruch 2, wobei die Veränderung der Lastanforderung des Kühlaggregats einer Veränderung der Temperaturverteilung innerhalb eines Raums des Kühlaggregats entspricht.

4. Regelsystem nach Anspruch 1, wobei der Regler konfiguriert ist, um den ersten und den zweiten Schalter in den ersten Zustand in Eingriff zu bringen als Reaktion auf eine gleichmäßige Temperaturverteilung innerhalb des Raums.

5. Regelsystem nach Anspruch 1, wobei der Verdichter eine im Wesentlichen höhere Lastgrenze als diejenige des Inverters aufweist.

6. Regelsystem nach Anspruch 5, wobei die Lastgrenze des Verdichters um mindestens das 1,5-Fache höher als diejenige des Inverters ist.

7. Regelsystem nach einem der vorstehenden Ansprüche, umfassend:
den Verdichter;
das Verdampfergebläse;
den Inverter, wobei der Inverter in Kommunikation mit der Energiequelle steht, und wobei:
der Regler konfiguriert ist, um unabhängig den ersten und den zweiten Schalter in einen jeweiligen aus dem ersten Zustand und dem zweiten Zustand basierend auf dem auslösenden Ereignis in Eingriff zu bringen.

## Revendications

1. Système de commande (200) pour une unité de réfrigération qui est alimentée par une source d'alimentation (206) et ayant un compresseur (202), un inverseur (204) et un ventilateur d'évaporateur (214), **caractérisé en ce que** le système de commande comprend :
un premier commutateur (208) couplé électriquement au compresseur et configuré, dans un premier état (208a), pour coupler sélectivement le compresseur à la source d'alimentation, et dans un second état (208b), coupler sélectivement le compresseur à l'inverseur ;
un second commutateur (210) couplé électriquement au ventilateur d'évaporateur et configuré, dans un second état (210b), pour coupler sélectivement le ventilateur d'évaporateur à la source d'alimentation, et dans un premier état (210a), coupler sélectivement le ventilateur d'évaporateur à l'inverseur ; et
un dispositif de commande (216) couplé opérationnellement à chacun des premier et second commutateurs et configuré pour engager indépendamment un ou plusieurs des premier et second commutateurs dans un état respectif du premier état et du second état d'après un événement de déclenchement ;
dans lequel l'engagement des premier et second commutateurs dans les premiers états respectifs correspond à un fonctionnement en pleine charge de l'unité de réfrigération et l'engagement des premier et second commutateurs dans les seconds états respectifs correspond à un fonctionnement en charge partielle de l'unité de réfrigération.

2. Système de commande selon la revendication 1, dans lequel l'évènement de déclenchement correspond à une demande de changement de charge de l'unité de réfrigération, le dispositif de commande étant configuré pour engager les premier et second commutateurs dans les premiers états respectifs pendant un fonctionnement en pleine charge et dans les seconds états respectifs pendant un fonctionnement en charge partielle.

3. Système de commande selon la revendication 2, dans lequel la demande de changement de charge de l'unité de réfrigération correspond à un changement de distribution de température au sein d'une armoire de l'unité de réfrigération.

4. Système de commande selon la revendication 1, dans lequel le dispositif de commande est configuré pour engager les premier et second commutateurs dans le premier état en réponse à une distribution de température régulière au sein de l'armoire.

5. Système de commande selon la revendication 1, dans lequel le compresseur a une capacité de charge sensiblement supérieure à celle de l'inverseur.

6. Système de commande selon la revendication 5, dans lequel la capacité de charge du compresseur est supérieure à celle de l'inverseur d'au moins 1,5 fois.

7. Système de commande selon une quelconque revendication précédente, comprenant :
le compresseur ;
le ventilateur d'évaporateur ;
l'inverseur, l'inverseur étant en communication avec la source d'alimentation, et dans lequel :
le dispositif de commande est configuré pour engager indépendamment les premier et second commutateurs dans un état respectif du premier état et du second état d'après l'évènement de déclenchement.
